# EUROPÄISCHE PATENTANMELDUNG

(11) **EP 2 808 591 A2**
(43) Veröffentlichungstag der Anmeldung: **03.12.2014**
(21) Anmeldenummer: 14162931.1
(22) Anmeldetag: 31.03.2014
(51) Int. Cl.: F16L 33/207, F16L 33/30, F02M 55/00

(54) **System umfassend Anschlussstutzen und Leitung**

(30) Priorität: 27.05.2013 DE 102013209756
(71) Anmelder: ROBERT BOSCH GMBH, 70442 Stuttgart (DE)
(72) Erfinder: Botschka, Michael, 70499 Stuttgart (DE); Lehmann, Thomas, 71701 Schwieberdingen (DE); Rao, Vijayanand, 70469 Stuttgart (DE)

(57) **Zusammenfassung**

Die Erfindung betrifft ein System umfassend Anschlussstutzen (10) und medienführende Leitung (20), wobei der Anschlussstutzen (10) einen Anschlussbereich für ein Leitungsende der medienführenden Leitung (20) aufweist. Erfindungsgemäß ist vorgesehen, dass die Außenumfangsfläche des Anschlussbereichs Profilierungsmittel (13, 16, 46; 11, 17, 18, 30-33, 47c, 47d, 48, 50-52) aufweist, welche mit einer Leitungsinnenfläche des Leitungsendes zusammenwirken, indem sich die Profilierungsmittel und die Leitungsinnenfläche selbstdichtend miteinander verzahnen. Die Profilierungsmittel (13, 16, 46) weisen wenigstens eine Mikrostruktur auf, die als Vertiefung (13) in der Außenumfangsfläche ausgebildet ist. Vorzugsweise sind eine Vielzahl von kugelflächensegmentförmigen Vertiefungen (13) vorgesehen, welche über den Anschlussbereich verteilt angeordnet sind, um eine geriffelte Oberflächentopographie der Außenumfangsfläche des Anschlussbereichs zu erzielen, wodurch eine künstlich erzeugte Oberflächenrauhigkeit für einen selbstdichtenden Festsitz der Leitung durch Mikroverzahnung mit der Innenfläche der Leitung sorgt. (Fig. 1)

## Beschreibung

### Stand der Technik

Die Erfindung geht aus von einem System umfassend Anschlussstutzen und medienführende Leitung nach der Gattung des Patentanspruchs 1.

Derartige Anschlussstutzen werden beispielsweise in Rücklaufleitungen von Hochdruckspeichereinspritzsystemen (Common-Rail) eingesetzt, um diese Leitungen mit Kraftstoffinjektoren oder Ventilen zu verbinden. Dabei sind die Anschlussstutzen als Teil von Steckverbindern dieser Kraftstoffinjektoren bzw. Ventile ausgebildet. Typischerweise weist ein derartiger Anschlussstutzen einen Anschlussbereich an seinem freien Endabschnitt auf, wobei an der Außenumfangsfläche des Anschlussbereichs Strukturen in Form von radialen Verdickungen wie z.B. eines Tannenbaumprofils und/oder eines Einführkegels ausgebildet sind, die dazu dienen, eine dichtende Verbindung zwischen dem Anschlussstutzen und der darauf aufgeschobenen Leitung herzustellen.

Aus dem Stand der Technik sind Leitungen, Schläuche und dergleichen mit mehrschichtigem Aufbau in einer Vielzahl von Ausführungsformen bekannt. So ist aus der DE 10 2009 045 898 A1 ein vierschichtiger Schlauch bekannt, der aus einer elastomeren Innenschicht aus Fluorkautschuk, einer Zwischenschicht aus Epichlorohydrin-Gummi, einer um die Zwischenschicht gewickelte Fadeneinlage mit Fäden aus aromatischen Polyamiden und einer Außenschicht gebildet ist. Aus der DE 203 20 567 U1 ist ein mehrschichtiger Schlauch aus fünf Schichten bekannt, welcher zwei Einbettungsschichten aus Elastomer, eine zwischen den Einbettungsschichten angeordnete Sperrschicht aus einem fluorhaltigen Thermoplast, und eine äußere Schutzschicht aus Gummimaterial wie CM, Polyepichlorhydrinkautschuk (ECO), ACM, chlorsulfoniertes Polyethylen (CSM), Ethylenacrylatkautschuk (AEM), Polychlorophen (CR) oder EVM sowie eine Verstärkungsschicht aus Fasern aufweist. Aus der FR-290 43 99 A1 ist ein Rohr mit vier Lagen bekannt, das einen elastomeren Zentralschlauch, eine darüber angeordnete Verstärkungsumflechtung aus Kevlar, eine darüber angeordnete Elastomerschicht und eine äußere Schutzschicht aufweist, wobei die Schutzschicht dazu dient, die Verschleißfestigkeitseigenschaften des Rohrs zu verbessern und dazu aus Kunststoff bzw. Polyethylen ausgebildet ist. Nachteilig bei diesem Stand der Technik ist, dass derartige Leitungen bzw. Schläuche wegen ihres vier- bzw. fünflagigen Aufbaus relativ aufwendig und kostspielig zu fertigen sind.

Aus der DE 696 10 379 T2 ist ein Kraftstoff führendes Rohr bekannt, das eine dünne Innenschicht aus einem thermoplastischen Material wie Polyamid, Polyester oder einer Fluorverbindung, eine darüberliegende Zwischenschicht aus Elastomer und eine äußere Schutzschicht aus vernetzbarem thermoplastischem Material aufweist, wobei das thermoplastische Material der Schutzschicht aus PVC oder Polyethylen sein kann. Wegen der relativ niedrigen Erweichungstemperatur von PVC bzw. Polyethylen und der daraus resultierenden geringen Temperaturfestigkeit ist dieser Stand der Technik für den Einsatz in aktuellen Hochdruckspeichereinspritzsystemen mit höheren Temperaturen jenseits von 170°C weniger geeignet.

Die JP 2008 087 168 A bezieht sich auf ein Hohlformprodukt, das eine Außenschicht und eine Innenschicht aufweist, wobei die Innenschicht aus einer Polyphenylensulfid-Kunstharzverbindung gebildet ist, während die Außenschicht eine Kunstharzverbindung aufweist, die Polyphenylsulfid enthält. Da bei diesem Stand der Technik eine verstärkendes Geflecht fehlt, ist die Druckbeständigkeit insbesondere im Hinblick auf Anwendungen in Hochdruckspeichereinspritzsystemen der neuesten Enfiniicklungsstufe mit höheren Temperaturen und Drücken nicht sichergestellt.

Aus der FR 2 707 550 A1 ist eine koextrudierte Mehrschicht-Rohrleitung bekannt, die eine Innenschicht aus Polyethylen, eine Adhäsionsschicht auf Polyethylenbasis und eine Außenschicht aus PPS aufweist. Wegen der relativ niedrigen Erweichungstemperatur von Polyethylen, ist dieser Stand der Technik für Anwendungen bei höheren Temperaturen, wie sie in Hochdruckspeichereinspritzsystem der neuesten Enfiniicklungsstufe mit Temperaturen jenseits von 170°C spezifiziert sind, weniger geeignet.

Die EP 1 024 320 A1 offenbart eine Schlauchleitung, die ein röhrenförmiges Innengehäuse aus einer Fluorkohlenstoffverbindung wie Teflon und eine Verstärkungsschicht aus geflochtenem Verstärkungsmaterial wie z.B. aus Polyphenylensulfid (PPS) aufweist. Dabei ist die Außenfläche des röhrenförmigen Innengehäuses mit der Verstärkungsschicht verbunden, indem diese Außenfläche soweit erhitzt wird, bis sie flüssig genug ist, um sich in der Verstärkungsschicht zu dispergieren. Nachteilig dabei ist, dass eine derartige Schlauchleitung ein relativ aufwendiges Fertigungsverfahren impliziert.

Aus der DE 10 2004 014 997 A1 bzw. US 2005/0211327 A1 ist ein mehrschichtiger Elastomerschlauch bekannt, der eine Innenschicht, eine darüber angeordnete Verstärkungsschicht aus schwefelhaltigem, polymerem Material wie Polyphenylensulfid (PPS) und eine darüber angeordnete Außenschicht aufweist, wobei sowohl die Innenschicht wie auch die Außenschicht aus elastomerhaltigen Materialien bestehen. Wegen des dreischichtigen Aufbaus ist ein derartiger Schlauch relativ teuer zu fertigen.

Ein entfernterer Stand der Technik ist aus der DE 103 60 334 A1 bekannt. Dabei handelt es sich um ein Kraftstoffrücklaufsystem, deren Leitungsabschnitte über Crimp-Verbindungen mittels Crimp-Hülsen mit Steckverbindern oder Leitungsabzweigungen verbunden sind. Nachteilig bei diesem Stand der Technik ist der für den Festsitz erforderliche Einsatz von Crimp-Verbindungen und Crimp-Hülsen, deren Montage einen zusätzlichen Arbeits- und Zeitaufwand impliziert.

### Vorteile der Erfindung

Das System mit den kennzeichnenden Merkmalen des Patentanspruchs 1 hat den Vorteil, dass eine sichere Dichtwirkung - im Unterschied zum Stand der Technik, bei dem die Dichtwirkung in der Regel erst durch eine zusätzliche Schelle oder dergleichen herbeigeführt wird - durch eine Verzahnung zwischen Profilierungsmitteln auf der Außenumfangsfläche des Anschlussbereichs der Anschlussstutzens und der Innenumfangsfläche des Leitungsendes der Leitung erzielbar ist.

Weitere vorteilhafte Weiterbildungen und Ausgestaltungen der Erfindung ergeben sich durch die in den Unteransprüchen aufgeführten Maßnahmen.

Nach einer besonders vorteilhaften Ausgestaltung der Erfindung weisen die Profilierungsmittel wenigstens eine Mikrostruktur auf, wobei sich die wenigstens eine Mikrostruktur in der Außenumfangsfläche des Anschlussbereichs über einen Tiefenbereich von etwa 25 µm bis 2000 µm erstreckt. Mithin ist unter einer Mikrostruktur eine Struktur mit Dimensionen im Mikrometerbereich bis in den beginnenden Millimeterbereich zu verstehen. Die wenigstens eine Mikrostruktur kann als Vertiefung in der Außenumfangsfläche ausgebildet sein, beispielsweise in Form eines Kugelflächensegments. Zweckmäßigerweise sind eine Vielzahl von Vertiefungen vorgesehen, welche über den Anschlussbereich verteilt angeordnet sind, um eine geriffelte Oberfläche zu erzielen, welche als künstlich erzeugtes Oberflächenrauhigkeitsprofil für eine optimale Mikroverzahnung mit einer Innenfläche des an den Anschlussstutzen angekoppelten Leitungsendes der Leitung sorgt. Aufgrund dieser Mikroverzahnung wird ein selbstdichtender Festsitz des Leitungsendes an dem Anschlussstutzen erzielt.

Nach einer Abwandlung der Erfindung kann die wenigstens eine Mikrostruktur als Rille in der Außenumfangsfläche des Anschlussbereichs ausgebildet sein. Dabei kann sich die Rille etwa geradlinig in Längserstreckungsrichtung des Anschlussbereichs erstrecken, so dass eine Vielzahl dieser Rillen, die in Umfangsrichtung des Anschlussstutzens jeweils von einander beabstandet verlaufend angeordnet sind, ein Oberflächenrauhigkeitsprofil der Außenumfangsfläche des Anschlussstutzens insgesamt bilden. Wenn die Rille schraubenlinienförmig in der Außenumfangsfläche des Anschlussbereichs verlaufend ausgebildet ist, wobei der Winkel der schraubenlinienförmigen Rille so gewählt ist, dass unmittelbar voneinander benachbarte Windungen der Rille eng beieinander liegend angeordnet sind, so genügt eine einzige Rille, um den Effekt eines Oberflächenrauhigkeitsprofils zu erzielen. Wenn zur Mikrostrukturierung wenigstens zwei Rillen vorgesehen sind, indem eine erste Rille als Rechtsschraube und eine zweite Rille als dazu gegensinnig verlaufende Linksschraube derart ausgebildet sind, dass sich eine geriffelte Außentopographie der Außenumfangsfläche des Anschlussbereichs bildet, so ist ein besonders gleichmäßiges Oberflächenrauhigkeitsprofil erzielbar.

Eine andere Ausgestaltung der Erfindung kann darin bestehen, dass die Profilierungsmittel wenigstens eine im Anschlussbereich des Anschlussstutzens radial umlaufende Erhebung aufweisen, wobei Übergangsabschnitte, welche Profilflanken der wenigstens einen Erhebung begrenzen, Rundungskonturen aufweisen. Dadurch werden Beschädigungen des Leitungsendes der medienführenden Leitung insbesondere während des Montagevorgangs am Anschlussstutzen vermieden. Dazu ist die jeweilige Rundungskontur an einer Höhe als Übergangsabschnitt konvex und an einer Senke als Übergangsabschnitt konkav ausgebildet. Die Erhebung kann ein symmetrisches Profil mit symmetrisch einander gegenüberliegenden Profilflanken oder ein asymmetrisches Profil mit einer steilen Profilflanke und einer dem freien Ende des Anschlussstutzens zugewandte flachen Profilflanke aufweisen. Indem die jeweiligen Übergangsabschnitte beispielsweise am Ansatz und Ende der Profilflanken derartiger Profile als Rundungskonturen ausgebildet sind, kann sich das Leitungsende einer flexiblen Leitung an das jeweilige Profil ohne Bildung von Hohlräumen anpressen.

Damit sich die medienführende Leitung, die insbesondere eine Kraftstoffleitung in einem Hochdruckspeichereinspritzsystem sein kann, optimal mit der Außenumfangsfläche des Anschlussstutzens verzahnen kann, ist die Leitung aus einem Schlauch mit nur zwei Schichten gebildet, indem eine elastische Innenschicht und eine darüber angeordnete aus Fäden gewickelte Verstärkungsschicht vorgesehen ist, welche so ausgebildet und gewickelt ist, dass sie die elastische Innenschicht radial nach innen unter Vorspannung hält. Indem dazu die Innenschicht aus einem fluorhaltigen, elastomeren Material wie Fluorkautschuk gebildet ist und die Verstärkungsschicht Fäden aus einer schwefelhaltigen Polymerverbindung wie Polyphenylensulfid aufweist, kann sich die elastisch ausgebildete Innenschicht unter dem praktisch homogen nach innen gerichteten Druck der Verstärkungsschicht in das Profil des Anschlussstutzens eingraben. Die Verstärkungsschicht übt dabei eine Doppelfunktion aus, indem sie einerseits aufgrund ihres Fadengeflechts die Innenschicht radial nach innen vorspannt und andererseits aufgrund ihrer weitgehend inerten chemischen Eigenschaft als Schutzschicht fungiert. Aufgrund der Materialeigenschaften sowohl der Innen- als auch der Verstärkungsschicht eignet sich die erfindungsgemäße Leitung für den Einsatz in Hochdruckspeichereinspritzsystemen der neuesten Generation, für welche hohe Temperaturen jenseits von 200°C und hohe Drücke typisch sind. Durch die Realisierung eines zweischichtigen Aufbaus der erfindungsgemäßen Leitung findet eine Umkehr zur bisherigen technischen Entwicklung mit vielschichtigem Aufbau statt. Im Gegensatz zum Stand der Technik ist mithin die erfindungsgemäße Leitung mit nur zweischichtigem Aufbau preisgünstig herstellbar.

### Zeichnungen

Ausführungsbeispiele der Erfindung sind in der nachfolgenden Beschreibung und in den beigefügten Zeichnungen näher erläutert. Letztere zeigen in schematisch gehaltenen Ansichten:
Fig. 1 eine Draufsicht auf einen teilweise dargestellten Anschlussstutzen, wobei sich von einem Einführkegel ein durchmesserkonstanter Anschlussbereich axial wegerstreckt, der in seiner Außenmantelfläche gemäß einer ersten Ausführungsform eine Vielzahl einzelner kugelflächensegmentförmiger Vertiefungen aufweist,
Fig. 2 eine Draufsicht auf einen teilweise dargestellten Anschlussstutzen gemäß einer zweiten Ausführungsform mit einem Einführkegel und einem sich davon wegerstreckenden durchmesserkonstanten Anschlussbereich, der an seiner Außenmantelfläche eine Vielzahl von Vertiefungen aufweist, welche als in Längserstreckungsrichtung des Anschlussbereichs verlaufende Rillen ausgebildet sind,
Fig. 3 eine Draufsicht auf einen teilweise dargestellten Anschlussstutzen gemäß einer drittem Ausführungsform mit einem Einführkegel und einem durchmesserkonstanten Anschlussbereich, an dessen Außenmantelfläche schraubenlinienförmig verlaufende Vertiefung ausgebildet ist,
Fig. 4 eine Draufsicht auf einen teilweise dargestellten Anschlussstutzen gemäß einer vierten Ausführungsform mit einer konusförmigen Einführfase und einem sich davon wegerstreckenden durchmesserkonstanten Anschlussbereich, an dessen Außenmantelfläche zwei gegensinnig schraubenlinienförmig umlaufende Vertiefungen ausgebildet sind,
Fig. 5 eine Teilansicht des Anschlussstutzens von Fig. 1 mit übergeschobenem Schlauchabschnitt,
Fig. 6 eine Teilansicht des Anschlussstutzens mit übergeschobenem Schlauchabschnitt analog Fig. 5, wobei zur Verstärkung der Verbindung zwischen Anschlussstutzen und Schlauchabschnitt zusätzlich eine den Schlauchabschnitt umschließende Schelle vorgesehen ist,
Fig. 7 eine Teilansicht eines Anschlussstutzens, der mit mikrostrukturierten Oberflächentopographien versehen ist, die sich entlang unterschiedlicher Axialbereiche des Anschlussstutzens erstrecken,
Fig. 8 einen Anschlussstutzen gemäß einer Ausführungsform, bei welcher axiale Übergänge verrundet ausgebildet sind,
Fig. 9 einen Schlauchabschnitt für den Anschlussstutzen von Fig. 8 in teilweise aufgeschnittener Darstellung,
Fig. 10 einen Anschlussstutzen mit einer am Außenumfang radial ringförmiger Verdickung in einer Teildarstellung, und
Fig. 11 einen Anschlussstutzen mit einer am Außenumfang radial umlaufenden Verdickung, deren Profil keilförmig ausgebildet ist, in einer Teildarstellung analog Fig. 10.

### Beschreibung der Ausführungsformen

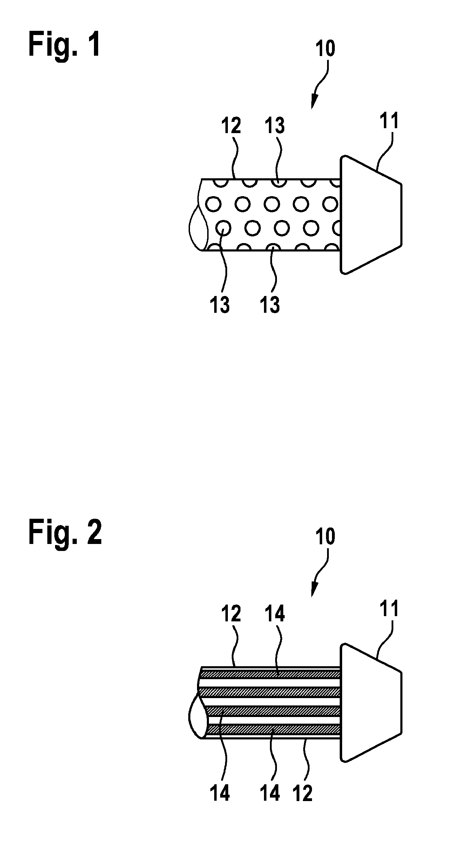

Fig. 1 zeigt einen Anschlussstutzen 10 gemäß einer ersten Ausführungsform, welcher zur Ankopplung einer in der Figur nicht dargestellten medienführenden Leitung dient, die als flexible Schlauchleitung ausgebildet sein kann und z.B. als Kraftstoffleitung bzw. Rücklaufleitung in Kraftstoffeinspritzsystemen zum Einsatz kommt. Der Anschlussstutzen 10 ist rotationssymmetrisch mit einem kreisförmigen Innenquerschnitt ausgebildet. An seinem freien Ende weist der Anschlussstutzen 10 einen Einführkegel 11, der dazu dient, das Aufschieben einer Schlauchleitung zu erleichtern, und einen sich davon in axialer Richtung wegerstreckenden im Wesentlichen durchmesserkonstanten hohlzylindrischen Abschnitt 12 auf. Zur Befestigung einer Schlauchleitung weist der Anschlussstutzen 10 in der Außenumfangsfläche bzw. Mantelfläche des Abschnitts 12 eine Vielzahl von regelmäßig angeordneten Vertiefungen 13 auf, welche gemäß einer anderen, nicht dargestellten Ausführungsform auch chaotisch bzw. stochastisch angeordnet sein können. Um eine sichere Verbindung zwischen Anschlussstutzen und Schlauchleitung zu bewerkstelligen, sind die Vertiefungen 13 kugelflächensegmentförmig ausgebildet und weisen Dimensionen auf, die von etwa 10 µm bis in den Millimeterbereich reichen. Im Ausführungsbeispiel weisen die einzelnen Vertiefungen 13 typischerweise einen Durchmesser im Bereich von ca. 10 µm bis 1 mm, eine Tiefe im Bereich von ca. 10 µm bis 2 mm und einen mittleren Abstand zwischen jeweils unmittelbar benachbarten Vertiefungen auf, welcher im Bereich von ca. 10 µm bis 10 mm liegt. Aufgrund dieser Dimensionen bilden die Vertiefungen 13 Mikrostrukturen in der Oberfläche des Abschnitts 12, wobei die mikrostrukturierte Oberfläche als Wirkfläche mit einer entsprechenden Oberflächenrauhigkeit für einen darauf geschobenen Schlauchabschnitt einer Fluidleitung wirkt. Dadurch wird zwischen Anschlussstutzen und Schlauchabschnitt ein Mikroverzahnungseffekt erzeugt, der für eine sichere und dichte Verbindung beider Komponenten sorgt. Zusätzlich wird durch die kugelflächensegmentförmige Ausbildung der Vertiefungen 13 in der angrenzenden Innenfläche eines elastisch ausgebildeten Schlauchabschnitts ein Anschmiegen bzw. Angleichen des Schlauchinnenabschnitts an die Umfangsfläche des Abschnitts 12 bewirkt.

Fig. 2 zeigt einen Anschlussstutzen 10 gemäß einer zweiten Ausführungsform, welche sich von der ersten Ausführungsform darin unterscheidet, dass die Vertiefungen in der Außenumfangsfläche bzw. Mantelfläche des Abschnitts 12 als Rillen 14 ausgebildet sind, die sich in Längserstreckungsrichtung des Abschnitts 12 über dessen gesamte Länge geradlinig erstrecken und in Umfangsrichtung der Mantelfläche voneinander gleichmäßig beabstandet sind. Hinsichtlich Tiefe und Breite der Rillen sind diese als Mikrostrukturen ausgebildet und im Ausführungsbeispiel so dimensioniert, dass eine Tiefe im Bereich von ca. 10 µm bis 2 mm und eine Breite im Bereich von ca. 10 µm bis 2 mm liegt, um eine sichere und dichte Verbindung zwischen Anschlussstutzen und Schlauchleitung zu gewährleisten. Auch hierbei wird erfindungsgemäß ein Mikroverzahnungseffekt genutzt.

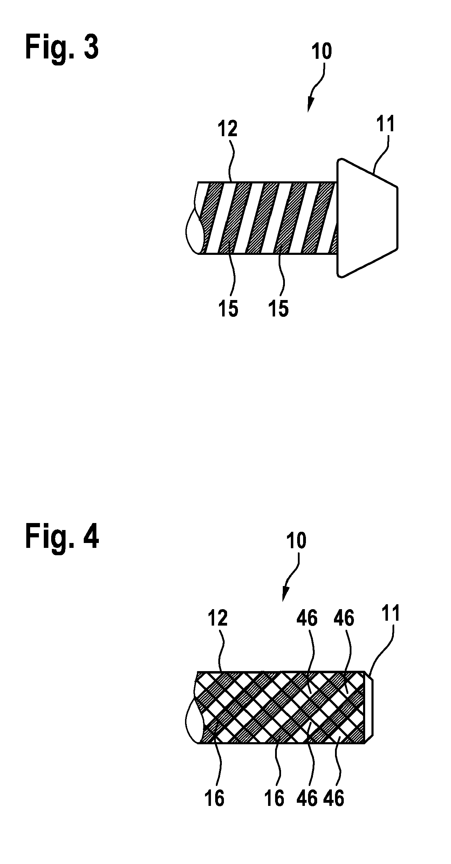

Fig. 3 zeigt einen Anschlussstutzen 10 gemäß einer dritten Ausführungsform, welche sich von der zweiten Ausführungsform darin unterscheidet, dass eine rillenförmige Vertiefung 15 in der Mantelfläche des Anschlussbereichs 12 ausgebildet ist, die schraubenlinienförmig verläuft. Die entsprechende Raumkurve folgt den Gleichungen x = a • cos (t), y = a • sin (t), z = b • t, wobei x, y, z Ortskoordinaten in einem Orthogonalsystem mit z in Längsachse bzw. Symmetrieachse des Anschlussstutzens 10 darstellen, a und b Konstanten sind und t den Winkel bezüglich der Längsmittelachse darstellt, welchen die Raumkurve beschreibt. Auch hierbei ist die rillenförmige Vertiefung 15 als Mikrostruktur ausgebildet und im Ausführungsbeispiel so dimensioniert, dass eine Tiefe im Bereich von ca. 10 µm bis 2 mm und eine Breite im Bereich von ca. 10 µm bis 2 mm liegt, um eine sichere und dichte Verbindung zwischen Anschlussstutzen und Schlauchleitung zu gewährleisten. Der Winkel t ist so gewählt, dass die Windungen der Schraubenlinie mit geringem Abstand aufeinander folgen, um eine gleichmäßige Strukturierung der Oberfläche des Anschlussbereichs zu erzielen.

Fig. 4 zeigt einen Anschlussstutzen 10 gemäß einer vierten Ausführungsform, welche sich von der dritten Ausführungsform darin unterscheidet, dass zwei zueinander gegensinnig schraubenlinienförmig in der Mantelfläche des Anschlussbereichs 12 umlaufend ausgebildete Rillen 16, 46 angeordnet sind, die sich einander kreuzen. Dabei ergibt sich eine regelmäßig strukturierte Oberflächentopographie der Umfangsfläche bzw. Mantelfläche des Abschnitts 12 in Form einer Riffelung. Die Rillen 16, 46 sind so dimensioniert, dass die Tiefe im Bereich von ca. 10 µm bis 2 mm liegt, um durch die Riffelung der Umfangsfläche eine sichere und dichte Verbindung zwischen Anschlussstutzen und Schlauchleitung zu gewährleisten.

Die jeweiligen Wnkel t, t' bezüglich der Längsmittelachse der beiden gegensinnig zueinander verlaufenden Schraubenlinien bzw. Rillen 16, 46 sind so gewählt, dass sie hinsichtlich ihres Betrags etwa gleich sind, d.h. | t | = | t' |, und sich eine periodisch und gleichmäßig geriffelte Oberflächenstrukturierung des von den Rillen umschlungenen Anschlussbereichs ergibt.

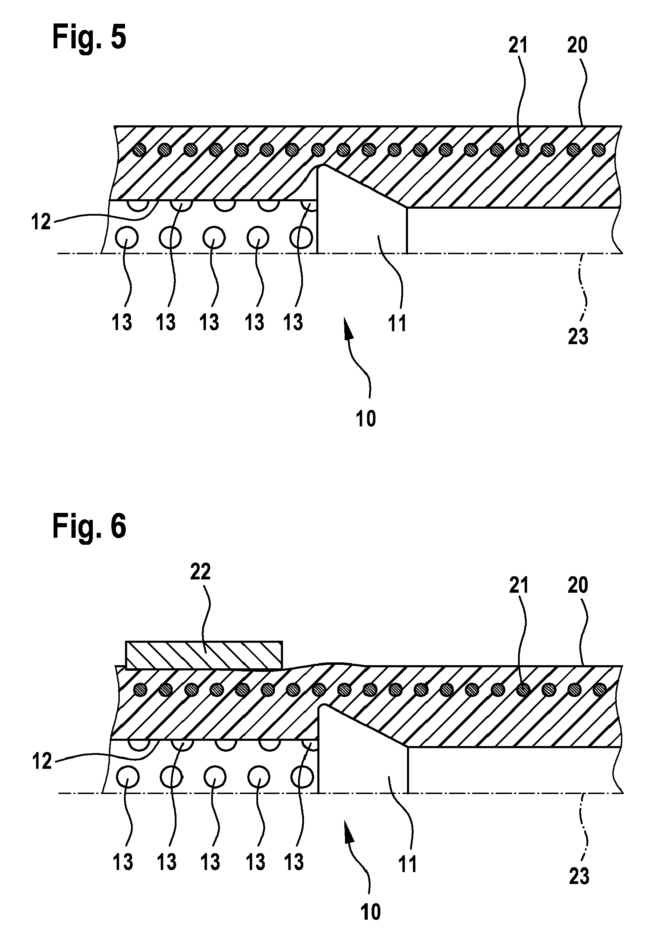

Fig. 5 zeigt beispielhaft einen erfindungsgemäßen Anschlussstutzen 10 gemäß der ersten Ausführungsform und einen mit dem Anschlussstutzen dicht verbundenen Schlauch 20. Dabei ist ein Schlauchabschnitt des Schlauchs 20 über den Anschlussstutzen 10 übergeschoben und umschließt den Einführkegel 11 und den daran angrenzenden Abschnitt 12, der in seiner Mantelfläche eine Vielzahl von kugelflächensegmentförmigen Vertiefungen 13 aufweist. Der elastisch ausgebildete Schlauch 20, der z.B. ein Gummischlauch sein kann, weist zur besseren Haftung eine innere Textilschicht 21 auf und schmiegt sich aufgrund des Mikroverzahnungseffekts an die Umfangsfläche des Anschlussstutzens 10 an. Aus Gründen der Übersichtlichkeit ist in Fig. 5 lediglich der obere Teil der bezüglich der Längsmittelachse 23 symmetrischen Stutzen-Schlauch-Anordnung dargestellt.

Fig. 6 zeigt den erfindungsgemäßen Anschlussstutzen 10, der mit einem Schlauch 20 verbunden ist, jedoch im Unterschied zu der Ausführungsform von Fig. 5 zusätzlich eine Schelle bzw. Vercrimpung 22 aufweist, welche den Außenumfang des Schlauchs 20 umschließt und dadurch die Verbindung zwischen Anschlussstutzen 10 und Schlauch 20 zusätzlich verstärkt. Diese Armierung ist insbesondere dann applikabel, wenn der verwendete Schlauch hinsichtlich Aufbau und Materialbeschaffenheit nicht an den erfindungsgemäßen Anschlussstutzen 10 angepasst ist. Der Mikroverzahnungseffekt wird dabei verstärkt, so dass die Haltekraft erhöht und eine formschlüssige Stutzen-Schlauch-Verbindung erzielt wird.

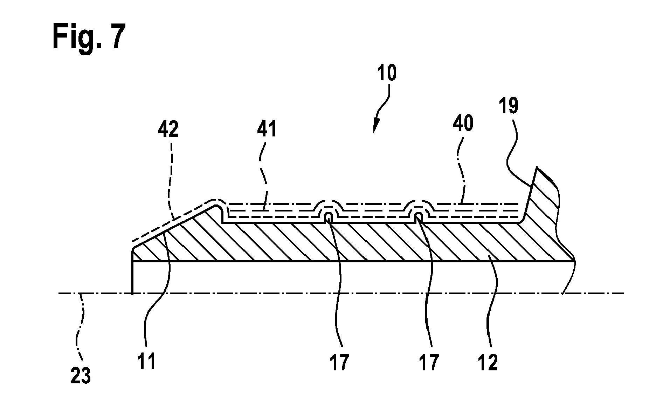

Fig. 7 veranschaulicht einen Anschlussstutzen 10 in einer geschnittenen Teildarstellung, welche aufgrund der Rotationssymmetrie des Anschlussstutzens bezüglich der Längsmittelachse 23 als Symmetrieachse einen oberen Teil des Anschlussstutzens 10 darstellt. Der Anschlussstutzen erstreckt sich in axialer Richtung von einem Einführkegel 11 über den Abschnitt 12 bis zu einem den Abschnitt 12 begrenzenden Anschlagkragen 19. Im Abschnitt 12 sind zwei voneinander axial beabstandete radiale Verdickungen 17 als Rippen ausgebildet. Anhand von drei gestrichelt eingezeichneten Linien 40, 41, 42 sind beispielhaft unterschiedliche Axialbereiche des Anschlussstutzens 10 mit mikrostrukturierten Oberflächentopographien z.B. durch kugelflächensegmentförmige Vertiefungen (Fig. 1) oder Rillen, die gerade oder schraubenlinienförmig verlaufend (Fig. 2 bis 4) ausgebildet sein können, versehen mit entsprechenden Auswirkungen auf den jeweils insgesamt zu erwartenden Mikroverzahnungseffekt. So erstreckt sich gemäß dem Verlauf der Linie 42 die mikrostrukturierte Oberflächentopographie vom freien Ende des Einführkegels 11 über den gesamten Abschnitt 12 bis zum Ansatz des Anschlagkragens 19, so dass die Außenumfangsfläche des Einführkegels 11 und des Abschnitts 12 sowie der beiden Rippen 17 profiliert ist. Der Mikroverzahnungseffekt für einen Schlauch ist hierbei aufgrund seiner umfassten Oberfläche des Anschlussstutzens 10 maximal. Demgegenüber erstreckt sich die mikrostrukturierte Oberflächentopographie gemäß dem Verlauf der Linie 41 lediglich über den Abschnitt 12, d.h. zwischen dem Einführkegel 11 und dem Ansatz des Anschlagkragens 19, so dass die Außenumfangsfläche des Abschnitts 12 und der beiden Rippen 17 profiliert sind. Da hierbei die umfasste Anschlussstutzenoberfläche kleiner ist als bei der durch die Linie 42 dargestellten Ausführungsform ist der Mikroverzahnungseffekt für einen aufgeschobenen Schlauch dementsprechend kleiner. Gemäß dem Verlauf der Linie 40 erstreckt sich die mikrostrukturierte Oberflächentopographie nur über den Abschnitt 12, wobei die beiden Rippen 17 ausgespart sind, so dass der Mikroverzahnungseffekt hierbei niedriger ausfällt als bei den beiden durch die Linien 42 bzw. 41 dargestellten Ausführungsformen.

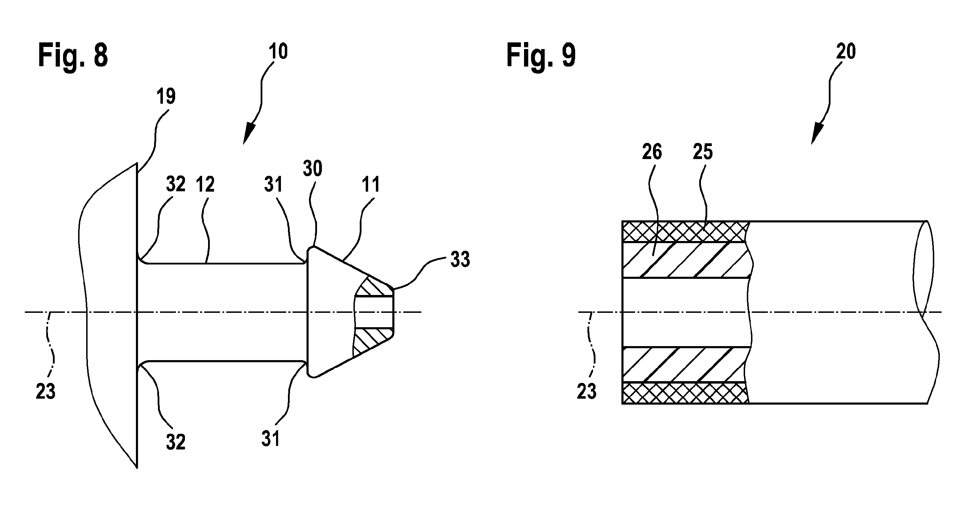

Fig. 8 zeigt eine weitere Ausführungsform des erfindungsgemäßen Anschlussstutzens 10. Diese Ausführungsform unterscheidet sich von der bisherigen Ausführungsformen darin, dass makroskopisch bemessene Strukturierungen bzw. Profile vorgesehen sind, die als stetig verlaufende Verrundungen an ansonsten abrupt verlaufenden Übergängen an durchmessergrößeren zu durchmesserkleineren Abschnitten des Anschlussbereichs ausgebildet sind und dazu dienen, Beschädigungen an der Schlauchinnenschicht beim Aufschiebevorgang zu verhindern. Eine erste Struktur 33 ist am freien Ende des Einführkegels 11 vorgesehen, indem die Umfangskante, welche die flache Profilflanke des Einführkegels 11 an seinem freien Ende begrenzt, als Rundungskontur ausgebildet ist. Eine zweite Struktur 30 ist am anderen Ende des Einführkegels 11 vorgesehen und zwar an der Stelle, an der der konusförmige Einführkegel 11 seinen größten Außendurchmesser aufweist, indem dort der entsprechende Übergangsabschnitt, welcher die flache Profilflanke des Einführkegels 11 zum hohlzylindrischen Abschnitt 12 hin begrenzt, als Rundungskontur mit konvexer Krümmung ausgebildet ist. Eine dritte Struktur 31, die unmittelbar angrenzend zur Struktur 30 angeordnet ist, ist an der steilen Profilflanke bzw. am abrupten Übergang des durchmessergrößten Abschnitts des Einführkegels 11 zum demgegenüber durchmesserkleineren Bereich des durchmesserkonstanten hohlzylindrischen Abschnitts 12 ausgebildet, indem dort eine entsprechende Rundungskontur ausgebildet ist, die gegensinnig zur unmittelbar vorgeordneten Struktur 30, also konkav verläuft. Am Übergang des hohlzylindrischen Abschnitts 12 zum demgegenüber durchmessergrößeren Anschlagkragen 19 ist eine vierte Struktur 32 ausgebildet, welche als Rundungskontur einen stetig verlaufenden Übergang zwischen dem Abschnitt 12 und dem durchmessergrößeren Anschlagkragen 19 im Bereich des Ansatzes des Anschlagkragens erzeugt. Durch diese Strukturierungen bzw. Profile liegt der elastisch ausgebildete Schlauch glatt an der Außenumfangsfläche des Anschlussstutzens 10 an, ohne dass sich Zwischenräume bzw. Hohlräume an den Übergängen zwischen Schlauch und Außenumfangsfläche des Anschlussstutzens bilden.

Fig. 9 zeigt in einer teilweise aufgeschnittenen Teilansicht einen Schlauch 20, welcher zum Ankoppeln an einen Anschlussstutzen 10 gemäß der bisherigen Ausführungsformen geeignet ist. Der Schlauch 20 ist zweischichtig ausgebildet und weist eine Innenschicht 26 und eine darüber angeordnete Verstärkungsschicht 25 auf. Die Innenschicht 26 ist aus einer fluorhaltigen Elastomerverbindung gebildet, vorzugsweise aus Fluorkautschuk. Aufgrund der Materialeigenschaften von Fluorkautschuk mit hoher Temperaturbeständigkeit von über 200°C, hoher Druckfestigkeit und weitgehend chemisch inertem Verhalten ist die Innenschicht einerseits für die Kraftstoff-Führung insbesondere bei hohen Temperaturen oberhalb von 170°C und hohen Drücken, die typisch für aktuell in der Entwicklung begriffene Hochdruckspeichereinspritzsysteme (z.B. Common-Rail-Systeme) sind, und andererseits wegen guter elastischer Eigenschaften für den erfindungsgemäßen Anschlussstutzen geeignet. Die außenliegende Verstärkungsschicht 25 umschließt die Innenschicht 26 und dient der Verstärkung der Innenschicht. Dazu ist die Verstärkungsschicht 25 aus einem Geflecht aus Textilgarn gebildet. Als Garn wird eine schwefelhaltige Polymerverbindung verwendet, da die Bindungsstabilität der Schwefelbrücken in der Polymerverbindung eine hohe Temperaturbeständigkeit und zudem eine hohe chemische Medienbeständigkeit der Polymerverbindung bewirkt. Die bevorzugte schwefelhaltige Polymerverbindung ist Polyphenylensulfid (PPS), welche eine hohe Temperaturbeständigkeit von über 200°C aufweist. Die Verstärkungsschicht 25 ist durch ein dicht gewickeltes Geflecht aus chemisch weitgehend inertem und flexiblem PPS-Garn gebildet, dessen Flechtwinkel so eingestellt ist, dass dadurch die elastomere Innenschicht 26 nach Montage des Schlauches am erfindungsgemäßen Anschlussstutzen an die Außenumfangsfläche des Anschlussstutzens 10 angepreßt wird. Dadurch kann einerseits eine Anpassung der Innenschicht an die Oberflächenstruktur des Anschlussstutzens erfolgen und andererseits die Schlauch-Stutzen-Verbindung während des Betriebs dem in der Leitung herrschenden hohen Innendruck standhalten, ohne dass sich der

Schlauch während des Betriebs eines derartigen Hochdruckspeichereinspritzsystems vom Anschlussstutzen lösen kann. Vorteilhaft ist demgemäß keine weitere Außenschicht z.B. in Form einer oder mehrerer Schutzschicht(en) erforderlich. Außerdem ist das nachträgliche Aufbringen eines Schutzschlauchs nicht erforderlich.

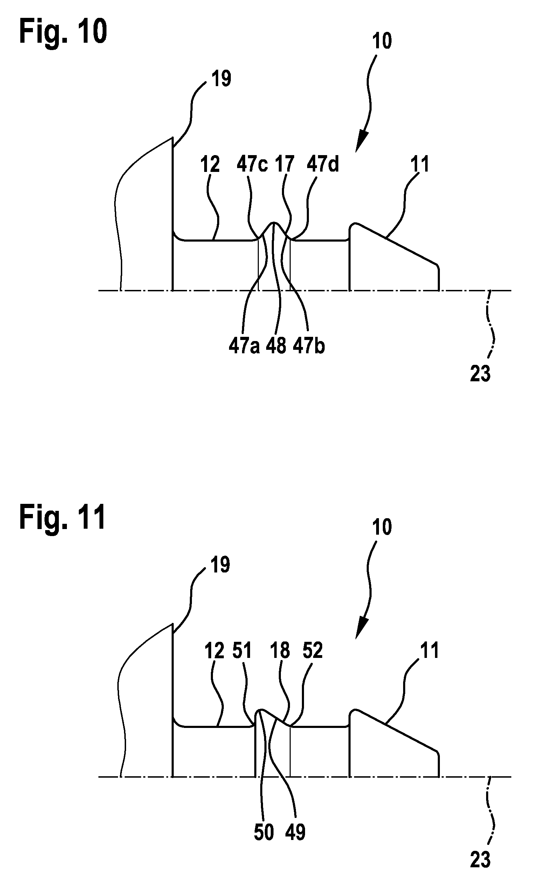

Fig. 10 zeigt eine weitere Ausführungsform des Anschlussstutzens 10, die sich von der in Fig. 8 dargestellten Ausführungsform darin unterscheidet, dass in dem hohlzylindrischen Bereich 12 zwischen Anschlagkragen 19 und Einführkegel 11 eine als Rippe ausgebildete radiale Erhebung bzw. Verdickung 17 ausgebildet ist, welche ein glockenförmiges bzw. gausskurvenförmiges, also ein symmetrisches Profil aufweist, indem die Profilflanken 47a, 47b zu beiden Seiten der zentralen Kuppe 48, welche den größten Außendurchmesser der Rippe 17 bildet, symmetrisch zueinander ausgebildet sind. Damit ein auf den Anschlussstutzen 10 aufgeschobener Schlauchabschnitt sich glatt an die Rippe 17 anschmiegen kann, ist einerseits die Kuppe 48 wegen des glockenförmigen bzw. gausskurvenförmigen Profils als Rundungskontur mit konvexem Verlauf ausgebildet und andererseits sind die Übergangsabschnitten 47c, 47d am Ansatz der Profilflanken 47a, 47b zum zylindrischen Abschnitt 12 ebenfalls als Rundungskonturen ausgebildet, jedoch mit konkavem Verlauf.

Fig. 11 zeigt eine gegenüber der Ausführungsform von Fig. 10 abgewandelte Ausführungsform des Anschlussstutzens 10, wobei die als Rippe ausgebildete radiale Erhebung bzw. Verdickung 18 auf dem zylindrischen Abschnitt 12 ein keilförmiges, d.h. asymmetrisches Profil aufweist, indem die konusförmig ansteigende Seite bzw. flache Profilflanke 49 zur rechten Seite der Kuppe 50 dem Einführkegel 11 zugewandt ist, wobei die Kuppe 50 den durchmessergrößten Abschnitt der Rippe bildet. Damit sich ein Schlauchabschnitt glatt an diese Rippe 18 und den Anschlussbereich 12 anlegen kann, ist die Kuppe 50 als Rundungskontur ausgebildet und zudem sind die Übergangsabschnitte 51, 52 ebenfalls als Rundungskonturen ausgebildet, d.h. der Übergangsabschnitt 51, welcher die steile Profilflanke begrenzt und dem Anschlagkragen 19 zugewandt ist, und der Übergangsabschnitt 52, welcher den Verlauf der flache Profilflanke 49 zum zylindrischen Abschnitt 12 begrenzt.

Jede der Rundungskonturen kann durch einen entsprechenden Konturenradius realisiert sein.

Zusammenfassend ist bei einem System, das einen Anschlussstutzen 10 und eine medienführende Leitung 20 umfasst, erfindungsgemäß vorgesehen, dass die Außenumfangsfläche des Anschlussbereichs des Anschlussstutzens 10 Profilierungsmittel 13, 16, 46 und 11, 17, 18, 30-33, 47c, 47d, 48, 50-52 aufweist, welche mit einer Leitungsinnenfläche des Leitungsendes der Leitung 20 zusammenwirken, indem sich die Profilierungsmittel und die Leitungsinnenfläche selbstdichtend miteinander verzahnen.

## Patentansprüche

1. System umfassend Anschlussstutzen und medienführende Leitung, wobei der Anschlussstutzen einen Anschlussbereich für ein Leitungsende der medienführenden Leitung aufweist, **dadurch gekennzeichnet, dass** die Außenumfangsfläche des Anschlussbereichs Profilierungsmittel (13, 16, 46; 11, 17, 18, 30-33, 47c, 47d, 48, 50-52) aufweist, welche mit einer Leitungsinnenfläche des Leitungsendes zusammenwirken, indem sich die Profilierungsmittel und die Leitungsinnenfläche selbstdichtend miteinander verzahnen.

2. System nach Anspruch 1, **dadurch gekennzeichnet, dass** die Profilierungsmittel (13, 16, 46) wenigstens eine Mikrostruktur aufweisen, wobei sich die wenigstens eine Mikrostruktur in der Außenumfangsfläche des Anschlussbereichs über einen Tiefenbereich von etwa 25 bis 2000 µm erstreckt.

3. System nach Anspruch 2, **dadurch gekennzeichnet, dass** die wenigstens eine Mikrostruktur als Vertiefung (13) in der Außenumfangsfläche ausgebildet ist.

4. System nach Anspruch 3, **dadurch gekennzeichnet, dass** die wenigstens eine Mikrostruktur als kugelflächensegmentförmige Vertiefung (13) ausgebildet ist.

5. System nach einem der Ansprüche 2 bis 4, **dadurch gekennzeichnet, dass** eine Vielzahl von Vertiefungen (13) vorgesehen sind, welche über den Anschlussbereich verteilt angeordnet sind.

6. System nach Anspruch 2, **dadurch gekennzeichnet, dass** die wenigstens eine Mikrostruktur als Rille (14, 16) in der Außenumfangsfläche des Anschlussbereichs ausgebildet ist.

7. System nach Anspruch 6, **dadurch gekennzeichnet, dass** sich die Rille (14, 16) etwa geradlinig in Längserstreckungsrichtung des Anschlussbereichs erstreckt.

8. System nach Anspruch 6, **dadurch gekennzeichnet, dass** die Rille (16, 46) schraubenlinienförmig in der Außenumfangsfläche des Anschlussbereichs verlaufend ausgebildet ist.

9. System nach Anspruch 8, **dadurch gekennzeichnet, dass** der Winkel der schraubenlinienförmigen Rille (16, 46) so gewählt ist, dass unmittelbar voneinander benachbarte Windungen der Rille eng beieinander liegend angeordnet sind.

10. System nach Anspruch 8 oder 9, **dadurch gekennzeichnet, dass** wenigstens zwei Rillen (16, 46) vorgesehen sind, wobei eine erste Rille (16) als Rechtsschraube und eine zweite Rille (46) als dazu gegensinnig verlaufende Linksschraube derart ausgebildet sind, dass sich eine geriffelte Außentopographie der Außenumfangsfläche des Anschlussbereichs bildet.

11. System nach Anspruch 1, **dadurch gekennzeichnet, dass** die Profilierungsmittel wenigstens eine im Anschlussbereich radial umlaufende Erhebung (11, 17, 18) aufweisen, wobei Übergangsabschnitte, welche Profilflanken der wenigstens einen Erhebung begrenzen, Rundungskonturen (30 - 33; 47c, 47d, 48, 50-52) aufweisen.

12. System nach Anspruch 11, **dadurch gekennzeichnet, dass** die jeweilige Rundungskontur an einer Höhe (30, 33, 48, 50) als Übergangsabschnitt konvex und an einer Senke (31, 47c, 47d, 51, 52) als Übergangsabschnitt konkav ausgebildet ist.

13. System nach Anspruch 11 oder 12, **dadurch gekennzeichnet, dass** die wenigstens eine Erhebung (18) ein asymmetrisches Profil mit einer steilen Profilflanke und einer dem freien Ende des Anschlussstutzens (10) zugewandte flachen Profilflanke (49) aufweist.

14. System nach Anspruch 11 oder 12, **dadurch gekennzeichnet, dass** die wenigstens eine Erhebung (17) ein symmetrisches Profil aufweist, dessen Profilflanken (47a, 47b) einander symmetrisch gegenüberliegen.

15. System nach einem der Ansprüche 1 bis 14, **dadurch gekennzeichnet, dass** die Leitung aus einem Schlauch (20) mit nur zwei Schichten (25, 26) gebildet ist, indem eine elastische Innenschicht (26) und eine darüber angeordnete aus Fäden gewickelte Verstärkungsschicht (25) vorgesehen ist, welche so ausgebildet und gewickelt ist, dass sie bei auf dem Anschlussstutzen montiertem Schlauch die elastische Innenschicht (26) radial nach innen unter Vorspannung hält.

16. System nach Anspruch 15, **dadurch gekennzeichnet, dass** die Innenschicht (26) aus einem fluorhaltigen, elastomeren Material wie Fluorkautschuk gebildet ist und die Verstärkungsschicht (25) Fäden aus einer schwefelhaltigen Polymerverbindung wie Polyphenylensulfid aufweist.
